# EUROPEAN PATENT APPLICATION

(11) **EP 3 477 258 A1**
(43) Date of publication of application: **01.05.2019**
(21) Application number: 16906406.0
(22) Date of filing: 26.12.2016
(51) Int. Cl.: G01C 21/20, G06F 17/30

(54) **MAP UPDATE DEVICE AND METHOD FOR NAVIGATION SYSTEM**

(30) Priority: 23.06.2016 KR 20160078387
(71) Applicant: Hyundai Mnsoft, Inc., Seoul 04365 (KR)
(72) Inventor: CHO, Yong Chan, Seoul 04365 (KR)
(74) Representative: Viering, Jentschura & Partner mbB Patent- und Rechtsanwälte
(86) International application number: PCT/KR2016/015269
(87) International publication number: WO 2017/222131

(57) **Abstract**

A map update device of a navigation system may include: a first map DB configured to store the entire map data; a second map DB configured to store differentially updated map data corresponding to differential data of map data to be updated in the first map DB; an update module unit configured to download the differential data from a server, generate the differentially updated map data, and synchronize the first map DB based on the differentially update map data stored in the second map DB; and a navigation module unit configured to perform route guidance by referring to the second map DB for a section corresponding to the differentially updated map data, when map data are being synchronized with the first map DB.

## Description

### [Technical Field]

The present invention relates to a map update device and method of a navigation system, and more particularly, to a map update device and method of a navigation system, which can stably perform map update in real time even while the navigation system is used, thereby improving user convenience.

### [Background Art]

Recently, most vehicles have a navigation system mounted therein.

The navigation system refers to a system that displays a map through a screen, finds the optimal route from a current position to a destination, and guides the vehicle to the destination.

The most basic function of the navigation system is to search for an accurate and fast route and guide the vehicle to a destination.

In order to search for an accurate and fast route, map information needs to be preferentially updated. Thus, when map update information is noticed from a navigation business operator, a user needs to perform map update in advance before using the navigation system, or perform map update after shutting down the navigation system.

That is because, when map update is performed while the navigation system is used (for example, while a route guidance operation is performed during driving), the operation of the navigation system may be suspended in the case that an error occurs in data during the map update or data is shared (that is, read and write operations for specific data are performed at the same time).

As a result, since the conventional navigation system cannot perform map update while the navigation system is used (for example, during route guidance), the navigation system can perform route guidance based on only the map data before the map update, thereby degrading user convenience. Therefore, there is a demand for a technique capable of stably performing map update in real time, even while the navigation system is used.

The related art of the present invention is disclosed in Korean Patent Publication No. 10-2005-0006907 published on January 17, 2005 and entitled "Navigation system and road guidance method using the same".

### [Disclosure]

### [Technical Problem]

Embodiments of the present invention are directed to a map update device and method of a navigation system, which can stably perform map update in real time even while the navigation system is used, thereby improving user convenience.

### [Technical Solution]

In an embodiment, a map update device of a navigation system may include: a first map DB configured to store the entire map data; a second map DB configured to store differentially updated map data corresponding to differential data of map data to be updated in the first map DB; an update module unit configured to download the differential data from a server, generate the differentially updated map data, and synchronize the first map DB based on the differentially update map data stored in the second map DB; and a navigation module unit configured to perform route guidance by referring to the second map DB for a section corresponding to the differentially updated map data, when map data are being synchronized with the first map DB.

When the map data required for route guidance are being synchronized with the first map DB, by referring to a block ID index, the navigation module unit may read map data corresponding to the block ID index from the second map DB, and perform route guidance.

The navigation module unit may read map data from the first map DB to perform route guidance before the second map DB is completely updated, read map data from the second map DB to perform route guidance for the section corresponding to the differentially updated map data until the first map DB is synchronized after the second map DB is completely updated, and read map data from the first map DB to perform route guidance after the first map DB is synchronized.

The map update device may further include a communication unit configured to communicate with an external server in order to update the map data.

When the differentially updated map data are completely written to the second map DB, the update module unit may change index information of a block ID of the map data to be updated in the first map DB.

When the synchronization with the first map DB is completed, the update module unit may restore the index information of the block ID of which the index information is changed.

In another embodiment, a map update method of a navigation system may include: downloading, by an update module unit, differential data of map data to be updated among the entire map data stored in a first map DB from a server, generating differentially updated map data, and writing the generated data to a second map DB; synchronizing, by the update module unit, the first map DB based on the differentially updated map data written in the second map DB; and performing, by a navigation module unit, route guidance by referring to the second map DB for a section corresponding to the differentially updated map data, when map data required for route guidance are being synchronized with the first map DB.

In the performing of the route guidance, when the map data required for route guidance are being synchronized with the first map DB, by referring to a block ID index, the navigation module unit may read map data corresponding to the block ID index from the second map DB, and perform route guidance.

In the performing of the route guidance, the navigation module unit may read map data from the first map DB to perform route guidance before the first map DB is synchronized, read map data from the second map DB to perform route guidance for the section corresponding to the differentially updated map data while the first map DB is synchronized, and read map data from the first map DB to perform route guidance after the first map DB is synchronized.

When the differentially updated map data are completely written to the second map DB, the update module unit may change index information of a block ID of the map data to be updated in the first map DB.

When the synchronization with the first map DB is completed, the update module unit may restore the index information of the block ID of which the index information is changed.

### [Advantageous Effects]

In accordance with the embodiments of the present invention, the map update device and method can stably perform map update in real time even while the navigation system is used, which makes it possible to improve user convenience. Furthermore, the map update device and method can perform route guidance using the navigation system any time, regardless of whether map update is being performed.

### [Description of Drawings]

FIG. 1 is a diagram illustrating a schematic configuration of a map update device of a navigation system in accordance with an embodiment of the present invention.
FIG. 2 is a flowchart for describing an operation of an update module unit in FIG. 1 in more detail.
FIG. 3 is a flowchart for describing an operation of a navigation module unit in FIG. 1 in more detail.
FIGS. 4A to 4D are diagrams for describing a map update method of a navigation system in accordance with an embodiment of the present invention.
FIGS. 5A to 5D are diagrams for describing map data blocks which are updated and synchronized.

### [Best Mode]

Hereafter, a map update device and method of a navigation system in accordance with embodiments of the present invention will hereinafter be described in detail with reference to the accompanying drawings.

It should be noted that the drawings are not to precise scale and may be exaggerated in thickness of lines or sizes of components for descriptive convenience and clarity only. Furthermore, the terms as used herein are defined by taking functions of the invention into account and can be changed according to the custom or intention of users or operators. Therefore, definition of the terms should be made according to the overall disclosures set forth herein.

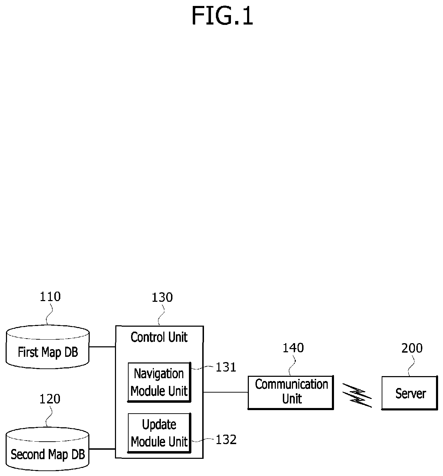

FIG. 1 is a diagram illustrating a schematic configuration of a map update device of a navigation system in accordance with an embodiment of the present invention.

As illustrated in FIG. 1, the map update device in accordance with the present embodiment may include a first map DB 110, a second map DB 120, a control unit 130 and a communication unit 140.

The first map DB 110 may store the entire map data for route guidance of the navigation system. The entire map data may include a plurality of blocks each having its own ID. The block may indicate a group of records in which field data are stored.

Therefore, in the present embodiment, map data to be updated, i.e. some map data to be updated among the entire map data, may become block-based map data.

The second map DB 120 may download the map data to be updated among the entire map data stored in the first map DB 110 from a server, the map data indicating map data of blocks including differential data to be updated. Then, the update module unit 132 may store blocks obtained by updating the corresponding differential data.

At this time, the blocks of the respective DBs 110 and 120 may be managed through block ID indexes which help to easily find to which block the record of the differential data belongs.

The first and second map DBs 110 and 120 may be formed as separate memories, or the storage region of one memory may be divided to form the first and second map DBs 110 and 120.

The first and second map DBs 110 and 120 may have different storage capacities assigned thereto (for example, the first map DB > the second map DB).

The control unit 130 may include a navigation module unit 131 and an update module unit 132, and operate the navigation module unit 131 and the update module unit 132 in a multitasking manner.

The navigation module unit 131 may perform route guidance according to a preset algorithm based on the map data, and the update module unit 132 may update the map data according to a preset algorithm. For example, the update module unit 132 may download differential data from the server, update a block corresponding to the differential data, and store the updated block in the second map DB.

For example, the control unit 130 may control the same map data, i.e. map data of the same block ID, not to be shared at the same time, such that the navigation module unit 131 and the update module unit 132 do not conflict with each other during a multitasking operation. That is, the control unit 130 may control the navigation module unit 131 to only read map data stored in any one of the first and second map DBs 110 and 120, i.e. map data of a specific block ID, such that the same map data stored in any one of the map DBs 110 and 120, i.e. map data of the same block ID, is not shared (read or written) at the same time.

The communication unit 140 may download map data to be updated (specifically, differential data of a specific block) through communication with the server 200, i.e. a server of an update center, when the map data are updated.

At this time, although the server 200, i.e. a server of an update center, is not described in detail in the present embodiment, the server 200 may include a user authentication server, a version management server and a data download server, and the update module unit 132 may download the map data to be updated (specifically, the differential data of the specific block) while communicating with the server 200 through the communication unit 140.

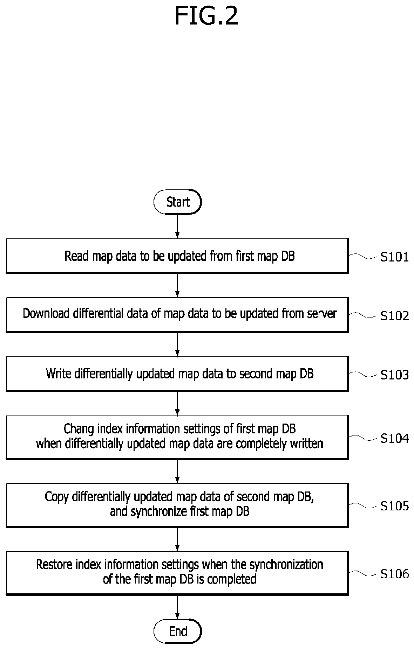

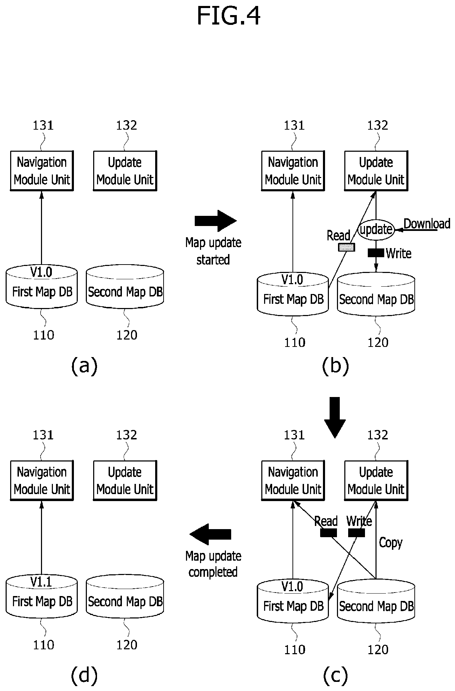

Hereafter, the operation of the control unit 130 will be described with reference to FIGS. 2 and 4.

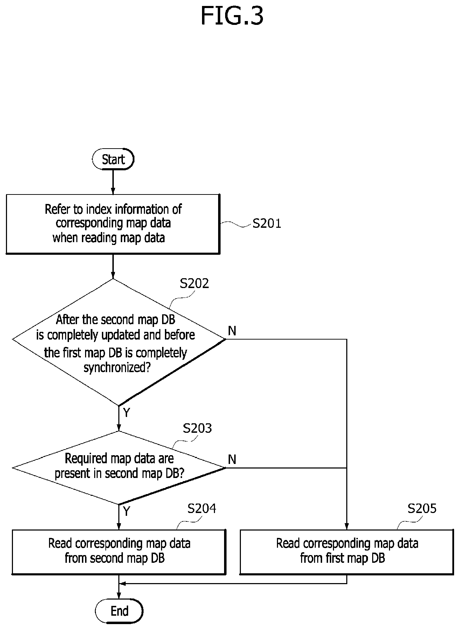

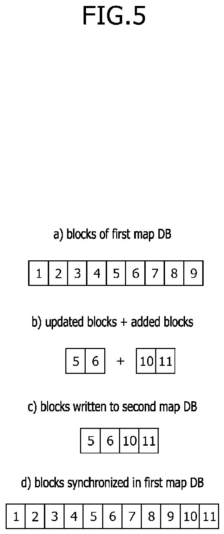

FIG. 2 is a flowchart for describing the operation of the update module unit in FIG. 1 in more detail, FIG. 3 is a flowchart for describing the operation of the navigation module unit in FIG. 1 in more detail, FIGS. 4A to 4D are diagrams for describing a map update method of a navigation system in accordance with an embodiment of the present invention, and FIGS. 5A to 5D are diagrams for describing map data blocks which are updated and synchronized.

When the operation of the navigation system is started, the navigation module unit 131 and the update module unit 132 may be operated.

The following descriptions will be based on the supposition that the navigation module unit 131 performs route guidance using the entire map data stored in the first map DB 110 (refer to FIG. 4A), and the update module unit 132 transmits the version V1.0 of current map data and user authentication information to the server 200 to check whether there are map data to be updated, and update the corresponding map data into map data of a new version V1.1.

As illustrated in FIG. 2, the update module unit 132 may read the map data to be updated (specifically, blocks which need to be updated) from the first map DB 110 at step S101 (refer to FIG. 4B). For example, the update module unit 132 may read blocks 5 and 6 which need to be updated, in FIG. 5A.

The update module unit 132 may download differential data of the map data to be updated from the server at step S102 (refer to FIG. 4B). For example, the map data to be updated may indicate map data of a block which needs to be updated based on differential data of a specific block, downloaded from the server 200. Hereafter, the map data to be updated may be referred to as differentially updated map data to be written to the second map DB. Then, the update module unit 132 may download the differential data of the block to be updated, and write the updated map data to the second map DB 120 at step S103 (refer to FIG. 4B). At this time, when there are map data of one or more blocks which are newly added in addition to the differentially updated block, the update module unit 132 may also download the map data of the one or more blocks from the server 200, and write the map data to the second map DB 120. As illustrated in FIG. 5B, the update module unit 132 may download the differential data of the blocks 5 and 6 which need to be updated, and update the corresponding blocks. Furthermore, the update module unit 132 may also download map data of blocks 10 and 11 which are newly added, and write the map data to the second map DB 120.

At this time, until the differentially updated map data are completely written to the second map DB 120, the navigation module unit 131 may read only the map data stored in the first map DB 110, in order to perform route guidance. The update module unit 132 may only differentially update the map data and write the updated map data to the second map DB 120. As illustrated in FIG. 5C, the update module unit 132 may write the differentially updated blocks 5 and 6 and the newly added blocks 10 and 11 to the second map DB 120.

Thus, when the write operation fails due to an unexpected accident while the map data are written to the second map DB 120, the update module unit 132 may reset the second map DB 120 during the next navigation system operation, and perform the update operation of the map data from the beginning, which makes it possible to prevent an update fail which may occur by any chance (for example, broken DB).

Then, when the updated map data are completely written to the second map DB 120, the update module unit 132 may change and display the block ID index settings of the map data to be synchronized in the first map DB 110, at step S104.

Then, although will be described below with reference to FIG. 3, the navigation module unit 131 may read the corresponding map data (for example, the differentially updated map data) from the second map DB 120 by referring to the block ID index information of the map data to be read for route guidance, and perform route guidance (refer to FIG. 4C). When the completely updated map data of the second map DB 120 (for example, the differentially updated map data) are completely synchronized or when the differentially updated map data of the second map DB are copied into the first map DB, the navigation module unit 131 may reread the corresponding map data from the first map DB 110, i.e. the map data having the block ID requested by the navigation module unit, and perform route guidance.

That is, when the map data to be updated are completely written to the second map DB 120, the update module unit 132 may copy the data written in the second map DB 120, i.e. the differentially updated map data, and write the copied data to the first map DB 110 to synchronize the first map DB at step S105. As illustrated in FIG. 5D, the blocks 1 to 11 including the updated blocks and the added blocks may be stored in the first map DB 110.

While the map data stored in the second map DB 120 are copied and written to the first map DB 110 as described above or while the first map DB 110 is synchronized, the navigation module unit 131 may read map data required for route guidance from the completely updated second map DB 120 (refer to FIG. 4C).

Then, when the latest map data stored in the second map DB 120 are copied and completely written to the first map DB 110 or when the first map DB is completely synchronized, the update module unit 132 may restore index information on the updated data of the first map DB 110, i.e. the map data of the synchronized block ID, at step S106.

As the synchronization of the map data of the first map DB 110 is completed and the setting of the index information is restored, the navigation module unit 131 may read the map data of the corresponding block ID from the first map DB 110, and perform route guidance (refer to FIG. 4D).

Referring to FIG. 3, the operation of the navigation module unit will be described.

The navigation module unit 131 may read map data from the first map DB 110 in order to perform route guidance. At this time, when reading the map data, the navigation module unit 131 may refer to block ID index information at step S201.

The navigation module unit 131 may check whether the current step corresponds to a step after the second map DB 120 is completely updated and before the first map DB 110 is completely synchronized, at step S202.

When the current step does not correspond to the step after the second map DB 120 is completely updated and before the first map DB 110 is completely synchronized, the navigation module unit 131 may read the corresponding data from the first map DB 110 and perform route guidance at step S205.

However, when the current step corresponds to the step after the second map DB 120 is completely updated and before the first map DB 110 is completely synchronized, the navigation module unit 131 may determine whether the map data required for route guidance are present in the second map DB 120, by referring to the block ID index information, at step S203. When the determine result indicates that the map data required for route guidance are present in the second map DB 120 (Y at step S203), the navigation module unit 131 may read the corresponding map data, i.e. map data of a specific block ID, from the second map DB 120, and perform route guidance, at step S204. At this time, the navigation module unit 131 may perform route guidance using both of the first and second map DBs 110 and 120, refer to the second map DB 120 for the updated blocks 5 and 6 and the newly added blocks 10 and 11, and refer to the first map DB 110 for the other blocks.

On the other hand, when the determine result indicates that the map data required for route guidance are not present in the second map DB 110 (No at step S203), the navigation module unit 131 may read the corresponding map data, i.e. the map data of the specific block ID, from the first map DB 110 and perform route guidance, at step S205.

As described above, the update module unit 132 may select one of the first and second map DBs 110 and 120 by referring to the block ID index information on the map data to be updated in the first map DB 110, and read the corresponding map data, i.e. the map data of the specific block ID. Thus, the map data may always be written to any one DB 110 or 120, which makes it possible to prevent an occurrence of conflict.

Referring to FIG. 4, a map update method will be described.

When the operation of the navigation system is started as illustrated in FIG. 4A, the navigation module unit 131 may perform route guidance using the map data of the old version V1.0, stored in the first map DB 110.

As illustrated in FIG. 4B, the update module unit 132 may transmit the version V1.0 of the map data stored in the first map DB 110 and user authentication information to the server 200, in order to check whether there are map data to be updated.

When the check result indicates that map data of a new version V1.1 are present in the first map DB 110, the update module unit 132 may read the map data to be updated (specifically, a block of differential data to be updated) from the first map DB 110, download differential data corresponding to the read map data, i.e. the block of the differential data to be updated, from the server 200, update the corresponding map data (specifically, the block of the differential data to be updated), and write the updated map data to the second map DB 120 to update the second map DB 120.

Then, as illustrated in FIG. 4C, when the updated map data, i.e. the differentially updated map data, are completely written to the second map DB 120, the update module unit 132 may change the settings of the index information on the map data to be updated in the first map DB 110, copy the map data written in the second map DB 120, i.e. the differentially updated map data, and write the copied data to the first map DB 110 to synchronize the first map DB.

When the synchronization of the first map DB 110 is completed, the settings of the index information may be restored as illustrated in FIG. 4D. The navigation module unit 131 may perform route guidance using required map data only in the first map DB 110, during route guidance.

At this time, depending on the performance or operation situation of the control unit, the resource allocation ratio of the navigation module unit 131 to the update module unit 132 may be adjusted.

In the present embodiment, the navigation module unit 131 may read the required map data, i.e. the differentially updated map data, from the second map DB 120 and perform route guidance, until the synchronization of the first map DB 131 is completed. Thus, although a synchronization fail occurs due to an unexpected accident while the first map DB 110 is synchronized, the map data stored in the second map DB 120 can be used, and the synchronization can be performed again. In this case, the first map DB 110 may be used for blocks other than the differentially updated block.

The map update device and method of the navigation system in accordance with the embodiments of the present invention may be applied to not only the case that route guidance is being performed, but also any situations in which the navigation system is being operated.

Thus, the map update device and method can stably perform map update in real time even while the navigation system is used, which makes it possible to improve user convenience. Furthermore, the map update device and method can perform route guidance using the navigation system any time, regardless of whether map update is being performed.

Although some embodiments have been provided to illustrate the invention in conjunction with the drawings, it will be apparent to those skilled in the art that the embodiments are given by way of illustration only, and that various modifications and equivalent embodiments can be made without departing from the spirit and scope of the invention. The scope of the invention should be limited only by the accompanying claims.

## Claims

1. A map update device of a navigation system, comprising:
a first map DB configured to store entire map data;
a second map DB configured to store differentially updated map data corresponding to differential data of map data to be updated in the first map DB;
an update module unit configured to download the differential data from a server, generate the differentially updated map data, and synchronize the first map DB based on the differentially update map data stored in the second map DB; and
a navigation module unit configured to perform route guidance by referring to the second map DB for a section corresponding to the differentially updated map data, when map data are being synchronized with the first map DB.

2. The map update device of claim 1, wherein when the map data required for route guidance are being synchronized with the first map DB, by referring to a block ID index, the navigation module unit reads map data corresponding to the block ID index from the second map DB, and performs route guidance.

3. The map update device of claim 1, wherein the navigation module unit reads map data from the first map DB to perform route guidance before the second map DB is completely updated, reads map data from the second map DB to perform route guidance for the section corresponding to the differentially updated map data until the first map DB is synchronized after the second map DB is completely updated, and reads map data from the first map DB to perform route guidance after the first map DB is synchronized.

4. The map update device of claim 1, further comprising a communication unit configured to communicate with an external server in order to update the map data.

5. The map update device of claim 1, wherein when the differentially updated map data are completely written to the second map DB, the update module unit changes index information of a block ID of the map data to be updated in the first map DB.

6. The map update device of claim 5, wherein when the synchronization with the first map DB is completed, the update module unit restores the index information of the block ID of which the index information is changed.

7. A map update method of a navigation system, comprising:
downloading, by an update module unit, differential data of map data to be updated among entire map data stored in a first map DB from a server, generating differentially updated map data, and writing the generated data to a second map DB;
synchronizing, by the update module unit, the first map DB based on the differentially updated map data written in the second map DB; and
performing, by a navigation module unit, route guidance by referring to the second map DB for a section corresponding to the differentially updated map data, when map data required for route guidance are being synchronized with the first map DB.

8. The map update method of claim 7, wherein in the performing of the route guidance,
when the map data required for route guidance are being synchronized with the first map DB, by referring to a block ID index, the navigation module unit reads map data corresponding to the block ID index from the second map DB, and performs route guidance.

9. The map update method of claim 7, wherein in the performing of the route guidance,
the navigation module unit reads map data from the first map DB to perform route guidance before the first map DB is synchronized, reads map data from the second map DB to perform route guidance for the section corresponding to the differentially updated map data while the first map DB is synchronized, and reads map data from the first map DB to perform route guidance after the first map DB is synchronized.

10. The map update method of claim 7, wherein when the differentially updated map data are completely written to the second map DB, the update module unit changes index information of a block ID of the map data to be updated in the first map DB.

11. The map update method of claim 10, wherein when the synchronization with the first map DB is completed, the update module unit restores the index information of the block ID of which the index information is changed.
